# EUROPEAN PATENT SPECIFICATION

(11) **EP 2 409 667 B1**
(45) Date of publication and mention of the grant of the patent: **17.06.2015**
(21) Application number: 10007641.3
(22) Date of filing: 22.07.2010
(51) Int. Cl.: A61C 17/34

(54) **Electric appliance for personal use**
Elektrogerät für den persönlichen Bedarf
Appareil électrique pour utilisation personnelle

(43) Date of publication of application: 25.01.2012
(73) Proprietor: Braun GmbH, 61476 Kronberg/Taunus (DE)
(72) Inventor: Kramp, Andreas, 65520 Bad Camberg (DE); Herzog, Karl, 60489 Frankfurt a.M. (DE)
(74) Representative: Schneider, Stefan Michael

(56) References cited:
- EP-A1- 0 585 738
- US-A1- 2003 084 524

## Description

### FIELD OF THE INVENTION

The present invention relates to small electrical appliances for personal use such as an electric toothbrush or an electric shaver.

### BACKGROUND OF THE INVENTION

Electric toothbrushes are known from prior art. E.g., EP 0560758 B1 describes a toothbrush where the electric motor received in the toothbrush's handle rotatorily drives a pinion mounted to the motor shaft of said electric motor. This pinion, in turn, drives a wheel element having an internal toothing and being attached to a spindle element which, in turn, drives a crankshaft structure to achieve an oscillation of an output shaft in a rotatory manner. Due to the plurality of transmission elements, the transmission or drive-train of said known toothbrush becomes rather bulky and space-consuming. Consequently, it is desirable to achieve a more compact, slimmer transmission structure to reduce the handle's cross-section. Furthermore, due to the plurality of transmission elements, a high degree of precision needs to be provided for the transmission elements to achieve a smooth engagement and reduced vibration. Thus, it also would be desirable to achieve an improved transmission structure where precision is less important without sacrificing smooth engagement and lack of vibration.

US 6,964,076 B2 discloses an electric toothbrush with a pinion attached to an electric motor received in the handle, said pinion driving another driving wheel having an internal toothing and driving an output member by means of an orbiting member in engagement with the arm of a swivel member that oscillates about a swivel axis. This known toothbrush transmission is also rather bulky and critical with regard to tolerances.

Another toothbrush with a bristle carrier driven by an electric motor is known from US-A-2003/0084524.

It is thus a desire to provide an improved electrical appliance, which avoids disadvantages of the prior art and in particular improves the latter. In particular, a less bulky toothbrush transmission with a slim cross-section and less critical with regard to tolerances of the transmission elements and support thereof is desirable without sacrificing smooth operation and lack of vibrations.

### SUMMARY OF THE INVENTION

This desire is satisfied by an electrical appliance as defined in claim 1. Embodiments of the proposed electrical appliance are laid down in the dependent claims.

To achieve the aforementioned objective in the transmission zone of the driving wheel attached to the driving shaft connected to the electric motor, it is suggested to separate the mounting portion of said driving wheel from the engagement portion thereof in the axial direction parallel to the axis of rotation of said driving wheel. In contrast to conventional pinions which have a central through-hole fitted onto a respective shaft and surrounded by the pinion's toothing on the outer circumferential surface thereof, the driving wheel is given different axial portions one of which is provided with engagement means for driving the subsequent transmission element and one of which serves the purpose of mounting the driving wheel to the driving shaft. In accordance with the invention, the engagement portion of the driving wheel is positioned axially offset from said mounting portion thereof. Separating the mounting portion from the engagement portion in axial direction eliminates or at least reduces radial deformation of the engagement portion due to the mounting forces applied to the mounting portion so that the tolerances of the mounting portion are less critical. Moreover, the shape and design, in particular the diameter of the engagement portion is not limited by the dimensions of the mounting portion, what makes it possible to further reduce the ratio of speeds of the driving shaft to the subsequent transmission element. Preferably, there is no axial overlap of the engagement portion with the mounting portion at all, however, the aforementioned effects may be achieved to a considerable extent, even when there is a small axial overlap of the mounting portion and the engagement portion as long as a major part of the engagement portion is axially offset from said mounting portion.

In particular, the driving wheel is a pinion with a toothing provided on the outer circumferential surface. Alternatively, the driving wheel could be provided with engagement means other than such a toothing, e.g., the driving wheel may be a friction wheel transmitting the driving forces to the subsequent transmission element by friction and/or frictional engagement. Moreover, the driving wheel might be provided with a conical toothing or a crankpin or a worm gear section to drive the subsequent transmission element. In particular, however, the driving wheel may be formed as a pinion having a cylindrical toothing on the outer circumferential surface thereof.

According to the invention, the mounting portion of said driving wheel includes a dead-end recess for receiving the driving shaft in a rotatively secured manner so that the driving wheel can be rotatably driven by said driving shaft. Said dead-end recess, in terms of its longitudinal or axial extension, ends before the engagement portion which is a full-bodied portion free of such recesses. In other words, the dead-end recess does not extend into the engagement portion, but ends approximately where the toothing or the other engagement means of the engagement portion is provided. The outer circumferential surface surrounding said mounting portion having the recess is not in engagement with the transmission element driven by the driving wheel. Said outer circumferential surface portion in the region of the mounting portion might be used as a support surface or may have no contact to other components.

In accordance with an embodiment of the invention, the engagement portion of the driving wheel has an outer diameter smaller than the outer diameter of said mounting portion. Since the aforementioned recess for mounting the driving wheel to the drive shaft does not extend into the engagement portion of the driving wheel, the latter can be reduced in diameter without being limited by the dimension of the recess receiving the driving shaft. The engagement portion may be provided with a cylindrical toothing on the outer circumferential surface where the recesses between the teeth extend radially inwards and further reduce the radial extension or diameter of the wheel body.

The driving wheel may be press-fitted onto the aforementioned driving shaft and/or rotatively secured to said driving shaft by frictional engagement. In accordance with the present invention, the mounting portion's recess receiving said driving shaft has a cross-sectional shape different to the driving shaft's cross-sectional shape. Contrary to conventional pinions and shafts that have cylindrical press-fitting surfaces with circular cross-sections, it is here suggested to provide the mounting portion's recess or the driving shaft with a cross-sectional shape deviating from a circle. The mounting portion's recess thus has a polygonal cross-section whereas the driving shaft's cross-section is circular. The polygonal cross-section of the mounting portion's recess may have more than four, further preferably more than six and in particular eight flattenings and/or polygonal contours. The polygonal surface sections are preferably flat, but also may have a convex or concave curvature. Furthermore, all of the polygonal surface sections may have the same shape so that a regular polygonal profile is formed. Alternatively, the polygonal surface sections may differ from each other in width and/or curvature so that a non-regular polygonal profile is formed.

The differing cross-sectional shapes of the driving shaft and the recess of the driving wheel receiving said driving shaft lead to the effect that no gas or air is trapped in the bottom portion of the dead-end recess when the mounting portion with the recess is press-fitted onto the driving shaft. The corners of the polygonal profile provide for exhaust or exit channels through which the air may exit when the driving shaft is inserted into the dead-end recess. In contrast, if no such differing cross-sectional shapes were provided to the driving shaft and the mounting portion's s recess, a sort of cushion of pressurized air would be created at the bottom of the dead-end recess when the driving shaft is inserted into the recess which pressurized air could cause loosening of the press-fit, axial displacement from the mounting position, or increased wear and/or noise level or would require additional securing or locking means as a pure frictional press-fit would not suffice.

Furthermore, the differing cross-sectional shapes, in particular the polygonal profile of the driving wheel's recess allow for a better adaption of the two press-fitting surfaces to each other. In particular, the polygonal surface sections of the recess may elastically and/or plastically deform to adapt to the shape of the driving shaft when inserting the driving shaft into the recess, wherein less volume of material needs to be displaced to achieve such adaption. Consequently, reduced forces are necessary for inserting the driving shaft into the recess, wherein such forces will show less variation due to tolerances so that automatic mounting may be better and more easily controlled.

The driving wheel can be made of various materials, in particular from a plastic material such as POM (polyoxymethylene) or PBT (polybutylene terephthalate) for the driving wheel to achieve low operating noises and high internal dampening.

Depending on the type of engagement means for transmitting the forces to the subsequent transmission element, the ratio of the axial length of the engagement portion and the mounting portion of the driving wheel may vary. When the engagement portion is provided with a cylindrical toothing on the outer circumferential surface, a good balance between sufficient mounting rigidity and mounting forces on the one hand and sufficiently low surface pressure on the engagement portion on the other hand is achieved when the axial length of the engagement portion may be about 25% to 65%, in particular about 40% to 50% of the entire axial length of the driving wheel and/or the axial length of the mounting portion is about 35% to 75%, in particular about 50% to 60% of the entire axial length of the driving wheel.

The aforementioned transmission element driven by said driving wheel may have various configurations, wherein an embodiment of the invention provides for a spindle element with a wheel element attached to one end thereof and in engagement with said driving wheel, said one end of the spindle element being pro-vided with a support piece for rotatably supporting the spindle element at a support member connected to a housing and/or to said electric motor. In order to achieve a precise engagement between the driving wheel and the wheel element attached to said spindle element, said support member is spaced apart from said electric motor further than the mounting portion of said driving wheel attached to the driving shaft connected to the motor. Preferably, the support member is on the side of the mounting portion opposite to the driving wheel's side facing the electric motor. Placing the support point for the spindle element and the wheel attached thereto, away from the electric motor and in proximity to the point of engagement between the wheel element of the spindle and the driving wheel reduces the influence of tolerances and avoids misalignment due to bending of the spindle.

In accordance with an embodiment of the invention, the support member is positioned, in the axial direction parallel to the driving shaft, in proximity to the end side of the aforementioned driving wheel opposite to the electric motor, wherein in particular the wheel element attached to the spindle element extends in the axial direction beyond the support piece of the spindle/wheel element and is closer to said electric motor than said support piece. In particular, the support member may be formed by a top portion of a projection projecting from said electric motor towards the transmission element, wherein said projection may be a part of the transmission housing and/or the handle housing in which the transmission and/or the electric motor is positioned.

The support piece provided at the spindle element may have various shapes and structures, wherein in particular the support piece may be formed by a stud-like, preferably conical projection projecting from one end of the spindle element and/or the wheel element attached thereto. Said stud-shaped projection can be received within a compatible recess formed at said support member.

The wheel element at one end of the spindle element may have different configurations depending on the desired cross-sectional configuration of the transmission and handle, respectively. In order to achieve a minimum cross-sectional area of the transmission, the wheel element has a sort of cup-shaped configuration and/or is provided with an internal circumferential engagement surface which is in engagement with the outer circumferential engagement surface of the driving wheel attached to the drive shaft. Using such a ring wheel allows to position the driving wheel within the circumference of said ring wheel with a minimum offset of the axis of rotation of the driving wheel to the axis of rotation of the transmission element, thereby achieving a minimum cross-sectional area of the transmission and handle, respectively. In particular, an almost circular cross-section can be achieved. In accordance with an embodiment of the invention, the ring wheel can be an internal geared wheel or ring gear in engagement with the toothing on the outer circumference of the driving wheel.

In order to achieve a more rectangular cross-section of the transmission and hand-piece, respectively, having a particularly small extension in one axis, the aforementioned wheel element attached to the spindle element can be formed as an external geared wheel, or in general a wheel with its outer circumferential surface forming the engagement means to transmit the driving forces e.g. by friction. Using such an external geared wheel significantly reduces the diameter of the wheel element in comparison to an internal geared wheel, so an even thinner cross-section of the transmission and handle can be achieved. More particularly, a thinner extension in one axis can be achieved, whereas, in comparison to a circular cross-section, the extension in the second axis perpendicular to the first axis is somewhat increased as the offset of the axis of rotation of the driving wheel to the axis of rotation of the wheel element of the transmission element is somewhat enlarged.

In order to reduce misalignment also on the output side of the transmission element, the transmission element and an output shaft driven by said transmission element may be radially supported by a common support body having a first support portion supporting said transmission element and a second support portion supporting said output shaft. Such common support body provides the advantage of better engagement and less importance of tolerances in addition to less misalignment between the transmission element and the output shaft irrespective of the aforementioned separation of the mounting portion and engagement portion of the driving wheel. The output shaft, in terms of its axis of rotation, is in particular offset in radial direction from the axis of rotation of the transmission element and/or the axis of rotation of the driving shaft.

In order to achieve a compact arrangement of the transmission in the direction of the axis of rotation of the output shaft and/or transmission element, the radial support of the end portion of the output shaft which is connected to the transmission element, is positioned as close to the electric motor as possible. In particular, the radial support of said end portion of the output shaft may be closer to the electric motor than the radial support of the distal end of the transmission element which distal end is the end further away from the electric motor. In other words, there is an overlap of the output shaft and said transmission element in the direction of the axis of rotation of the output shaft. When the aforementioned common support body is used for radially supporting the transmission element and the output shaft, it is preferred to have the second support portion supporting the output shaft to be positioned closer to the electric motor than the first support portion supporting the transmission element.

In accordance with an embodiment of the present invention, the support body includes a plate-shaped body section including said first support portion and a dome-shaped projection extending from said plate-shaped body section towards the electric motor and being provided with said second support section. Using such a support body with a rearward projecting support section for the output shaft provides a very compact arrangement without sacrificing precise alignment of the output shaft and the transmission element, thus providing for better engagement and less relevance of tolerances.

In order to at least reduce wear and/or tear of the transmission elements and to achieve smooth engagement, the aforementioned transmission element is rotatably supported by an elastic support structure having a bearing sleeve rotatably receiving the transmission element, said bearing sleeve being elastically held to allow tumbling of said transmission element under load and to compensate for curvature of the longitudinal axis of the transmission element. For example, if the longitudinal axis of the spindle element is slightly curved, e.g. in a slight banana shape, the elastic support of the bearing sleeve provides for an adaption of the alignment of the bearing sleeve axis to the orientation of the spindle element axis. Thus, abrasion of the bearing sleeve surface and transmission element surface in engagement with each other can be avoided or at least reduced.

Such elasticity of the bearing sleeve orientation can be achieved by various support structures. In accordance with an embodiment of the invention, the bearing sleeve is held by and connected to an in particular plate-shaped support body section having a reduced thickness section around said bearing sleeve. In particular, the reduced thickness section may be formed by an annular, in particular groove-shaped recess in the plate-shaped support body surrounding said bearing sleeve.

### BRIEF DESCRIPTION OF THE DRAWINGS

These and other aspects, objects, features and advantages of the present invention will be more clearly understood and appreciated from a review of the following detailed description of a preferred embodiment and the appended claims, and by reference to the accompanying drawings. In the drawings show:
- Fig. 1:: a perspective view of an electric toothbrush according to a preferred embodiment of the invention,
- Fig. 2:: a cross-sectional view of the drive unit received in the handle of the toothbrush of Fig. 1, said drive unit including an electric motor oscillating in a rotatable manner an output shaft via a drive-train or transmission,
- Fig. 3:: a cross-sectional view of the transmission along line B-B in Fig. 2, said cross-sectional view showing the engagement of a pinion fitted onto the motor shaft with an internal geared wheel,
- Fig. 4:: a front view of the pinion fitted onto the motor shaft shown in Fig. 2,
- Fig. 5:: a cross-sectional view of the pinion along line A-A in Fig. 4, said cross-sectional view showing the separated engagement and mounting portions of the pinion with a polygonally contoured recess in the mounting portion to be press-fitted onto the motor shaft,
- Fig. 6:: a front view of the pinion of Figures 4 and 5 showing the polygonal con-tour of the recess in the mounting portion,
- Fig. 7:: a sectional view of the transmission element provided with the internal geared wheel in engagement with the pinion on the motor shaft, wherein the support structure for said transmission element including a support plate with an elastically held bearing sleeve to compensate for misalignment and curvature of the longitudinal axis of the transmission element is shown,
- Fig. 8:: a sectional view of the transmission element and its supporting structure along line D-D in Fig. 7, and
- Fig. 9:: a cross-sectional view of the transmission element along line C-C in Fig. 8.

### DETAILED DESCRIPTION OF THE INVENTION

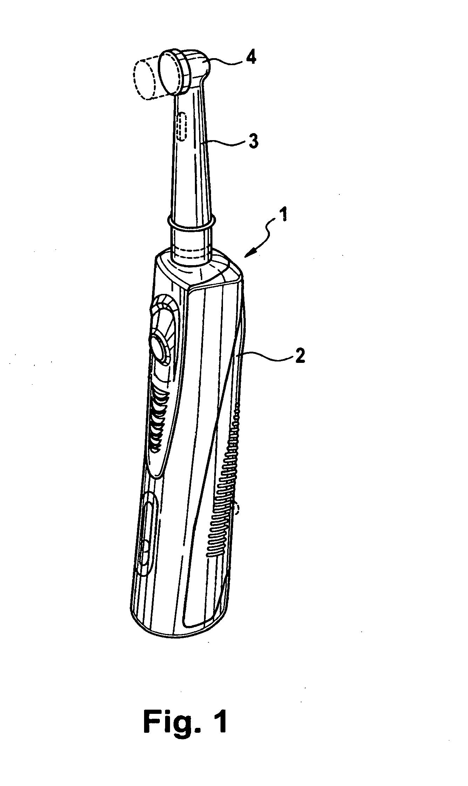

The electrical appliance for personal use which is shown in Fig. 1, is an electric toothbrush I which includes a brush head 4 which is provided with an elongated, substantially tube-shaped neck 3 which is releasably connected to handle 2. Said handle 2 includes an electric power source such as batteries, and further-more an electric motor 6 powered by said power source and control means such as a start/stop button for controlling the drive unit which is housed in said handle 2.

The brush head 4 may include a bristle carrier provided with a plurality of tufts of bristles or other tooth-cleaning or oral care tools such as interdental pins or bar-shaped plastic bodies. The bristle carrier may be oscillated in a rotatable manner about an axis perpendicular or parallel to the longitudinal axis 29 of the toothbrush 1 and/or the neck 3.

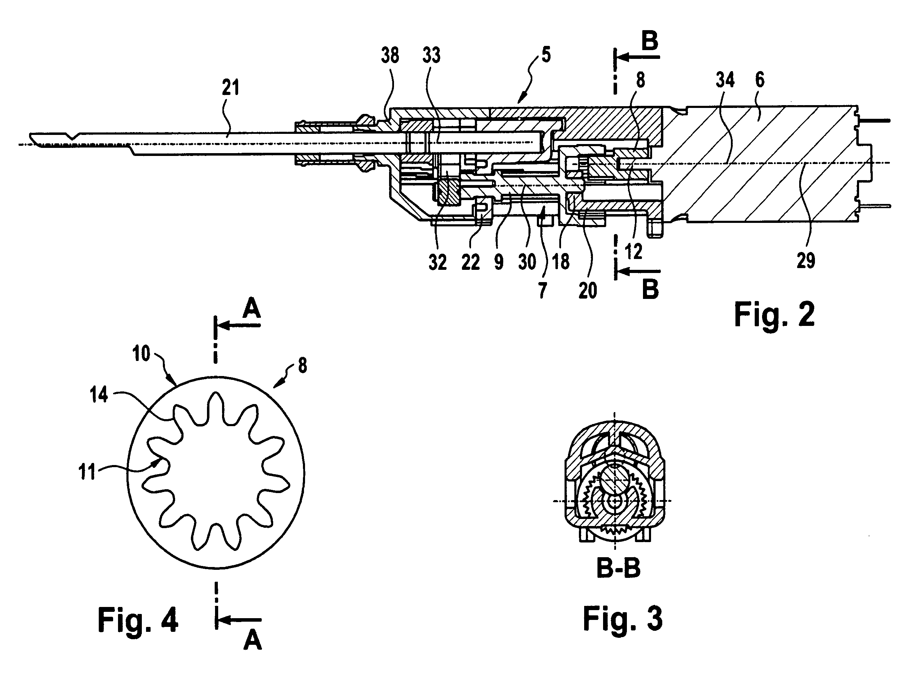

To drive the working tool of the electrical appliance, the drive unit 5 received in the handle 2 includes a drive-train or transmission 7 connecting the aforementioned electric motor 6 to said working tool, i.e. the brush head 4 as shown in Fig. 1. The drive unit 5, as shown in detail in Fig. 2, includes a driving wheel 8 which is secured to a driving shaft 12 in a rotatively rigid manner so that the driving wheel 8 rotates together with the driving shaft 2 about a common axis which may coincide with the aforementioned longitudinal axis 29 of the handle 2. The driving shaft 12 may be the motor shaft of the electric motor 6.

The driving wheel 8 drives subsequent transmission element 9 which rotates about an axis of rotation 30 which is parallel to and spaced from the axis of rotation of the aforementioned driving shaft 12. One end of said transmission element 9 is in engagement with the aforementioned driving wheel 8 as will be described later in greater detail, whereas the distal end of said transmission element 9 is provided with an orbiting pinion 31 which oscillates a swiveling arm 32 about an swiveling axis 33 radially offset from the axis of rotation 30 of the transmission element 9 and extending on the side of the driving shaft 12 opposite to the transmission element 9. Via said swiveling arm 32, an output shaft 21 is oscillated in a rotatable manner, which output shaft 21 extends substantially coaxially with the aforementioned swiveling axis 33 and/or parallel to the axes of the driving shaft 12 and the transmission element 9. The output shaft 21 extends through the aforementioned neck 3 and is in driving connection with the brush head 4.

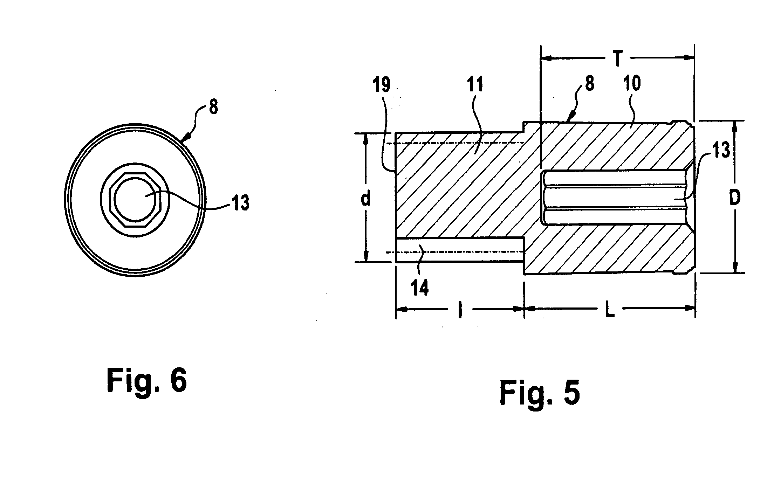

The driving wheel 8 mounted onto the driving shaft 12 which is connected to the electric motor 6, is shown in detail in Figures 4 to 6. Said driving wheel 8 comprises a mounting portion 10 for mounting the wheel to the driving shaft 12 and an engagement portion 11 for engaging the subsequent transmission element 9. As can be better seen from Fig. 5, the mounting portion 10 and the engagement portion 11 are axially offset in the direction of the axis of rotation 34 and are formed by neighboring portions of the driving wheel integrally connected to each other. The mounting portion 10 and the engagement portion 11 are positioned one behind the other in the axial direction.

More particularly, the mounting portion 10 includes a recess 13 formed as a dead-end hole in the center of the mounting portion 10 and opening to one end face of the driving wheel 8. Said recess 13 is press-fitted onto and thus receiving the driving shaft 12 so that there is a frictional engagement between the circumferential surface of said recess 13 and the circumferential surface of the driving shaft 12 to transmit from the driving shaft 12 to the driving wheel 8. The recess 13 extends only through the mounting portion 10 and does not extend through the engagement portion 11. In the shown embodiment, the recess 13 has a depth T which is about 30% to 75%, more preferably 40% to 60% of the entire length L of the driving wheel 8.

As can be seen from Figures 5 and 6, the cross-sectional shape of the recess 13 is deviating from a circle. More particularly, the recess 13 has a polygonal cross-sectional shape. In accordance with the preferred embodiment shown in Fig. 6, the polygonal contour of the recess 13 may include eight flat-shaped surface portions having the same dimensions and being regularly inclined to each other so that a regular polygonal contour is formed. The flat surface sections facilitate manufacturing as the pin-shaped core used for the plastic molding process may be provided with the respective flattened surfaces by means of grinding with a simple grinding apparatus having parallel grinding tools sandwiching the pin when forming the surfaces. However, other configurations of the polygonal contour of the recess 13 are possible as mentioned at the beginning.

In contrast to such polygonal cross-sectional shape of the recess 13, the drive shaft 12 onto which the driving wheel 8 is press-fitted, has a circular, cylindrical contour. Consequently, when the driving shaft 12 is inserted into the recess 13, the corners between the flattened surfaces of the polygonal contour provide for exhaust channels through which air may exit from the bottom portion of the dead-end hole or recess 13, thereby avoiding the compression of air in the bottom portion what would potentially loosen the press-fit or even dislocate from the intended mounting position. Moreover, the differing cross-sectional shapes allow for a better control of the press-fitting operation as explained at the beginning.

The cross-sectional shape of the substantially cylindrical recess 13 deviates from the circular cross-section of the driving shaft 12 such that at least one longitudinal clearance zone is formed between the driving shaft 12 and the recess 13 to connect the bottom portion of the recess 13 with its opening to the front face, thereby providing an exhaust channel for the air trapped between the bottom of the recess 13 and the front face of the driving shaft 12.

As can be seen from Fig. 5, the engagement portion 11 of the driving wheel 8 has an outer diameter d which is smaller than the outer diameter D of the mounting portion 10 what is possible due to the fact that the recess 13 does not extend through the engagement portion 11, wherein the diameter ratio d : D can range from 50% to 95%, preferably 75% to 90% according to a preferred embodiment. In the shown embodiment of Fig. 5, the engagement portion 11 is provided with a toothing 14 on the outer circumferential surface. Depending on the ratio of speeds to be achieved, the number of teeth may vary as well as the diameter d may vary. To achieve a significant speed reduction, the driving wheel 8 may have less than 15 teeth, preferably less than 12 teeth, whereas the transmission element 9 may have more than 25, preferably more than 30 teeth. However, depending on the structure of the remaining parts of the drive train, other teeth ratios can be chosen.

The module or reciprocal of the diametral pitch of the toothing 14 may be considerably smaller than the module of conventional driving wheels, wherein it is preferably less than 0.30, wherein in the shown embodiment the module is 0.26.

The length I of the engagement portion 11 is about 40% to 50% of the entire length of the driving wheel 8, whereas the length L of the mounting portion 10 is about 50% to 60% of the entire length of the driving wheel, cf. Fig. 5.

The transmission element 9 driven by the driving wheel 8 is, in the shown embodiment, a spindle element 15 with engagement means provided at both ends thereof. At the end to be in engagement with the driving wheel 8, a wheel element 16 is provided, which, in the shown embodiment, is an internal geared wheel having an internal toothing in engagement with the toothing 14 of driving wheel 8. The wheel element 16 is preferably formed integrally in one piece with the spindle element 15, e.g. as a plastic molded piece.

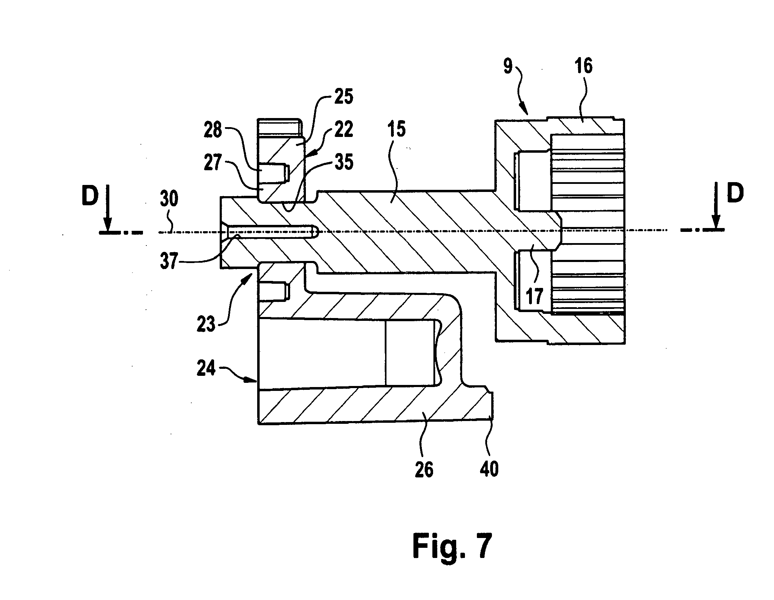

The transmission element 9 is radially and axially supported by a support structure including support points at both end portions of the spindle element 15. At the end of the spindle element 15 where the aforementioned wheel element 16 is provided, the support structure includes a support piece 17 positioned within the ring-shaped wheel element 16. More particularly, the support piece 17 projects from the bottom of the cup-shaped recess defined by said wheel element 16 and extends coaxially to the spindle element 15. The support piece 17 is formed as a stud-like projection with a slightly conical end, the diameter of which projection is considerably smaller than the diameter of the spindle element 15. As shown by Fig. 7, the support piece 17 has an axial length shorter than the wheel element 16 which extends in axial direction beyond the support piece 17 towards the electric motor 6.

Preferably, the support piece 17 is integrally formed in one piece with the wheel element 16 and/or the spindle element 15, e.g. by means of a plastic injection molding process. Such integral structure of the wheel element 16 and the sup-port piece 17 reduces possible tolerances and ensures a smooth engagement of the wheel element 16 with the driving wheel 8 and avoids misalignment thereof.

The support piece 17 is received within a recess of a support member 18 which may be a part of a transmission housing and/or a part of the handle housing and/or a structural part connected to the electric motor 6. Preferably, the support member 18 is formed by a top portion of a dome-shaped projection 20 projecting from said electric motor 6 towards the transmission element 9, wherein said projection 20 has an axial extension in the direction of the driving shaft 12 which is longer than the driving shaft 12 and/or longer than the mounting portion 10 of the driving wheel 8. More particularly, the top portion of said projection 20 is positioned in the proximity of the end surface 19 of driving wheel 8 to be in engagement with the aforementioned support piece 17. Consequently, the support point of the transmission element 9, more particularly the point of support of the transmission element 9 at the spindle element's end close to the electric motor 6 is - approximately - on the side of the driving wheel 8 opposite to the electric motor 6. Supporting the transmission element 9 in close proximity to the driving wheel 8 and the engagement portion 11 thereof ensures a high precision of the engagement and avoids misalignment due to bending of the spindle element 15.

The other end portion of the transmission element 9 is supported by a support body 22 which at the same time provides for support of the output shaft 21. The support body 22 includes a plate-shaped body section 25 which is provided with a through-hole 35 in which the spindle element 15 of the transmission element 9 is received. According to a preferred embodiment of the invention, the plate-shaped body section 25 is formed first, e.g. by means of a plastic molding process. In a second process step, the spindle element 15 may then be manufactured, in particular by means of a second plastic molding process wherein the spindle element 15 is molded to extend within the through-hole 35 in said plate-shaped body section 25. Cooling of the injected plastic causes a reduction of the diameter of the spindle portion received in said through-hole 35, thereby creating some clearance and play between the spindle element 15 and the through-hole 35 so that a ro-tatable support with reduced friction is achieved.

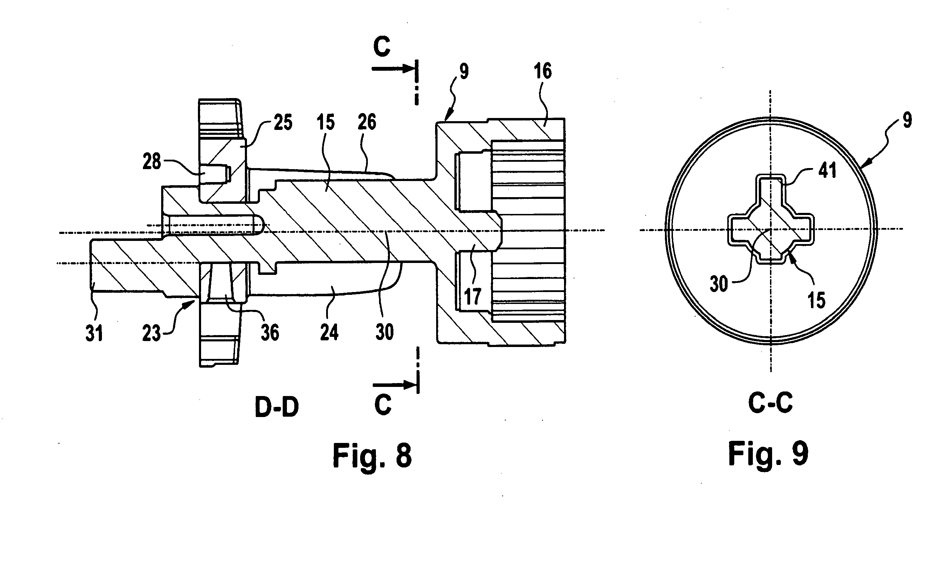

As shown by Figures 7 and 8, the spindle element 15, preferably, has a reduced diameter section forming the support surface received in the through-hole 35 of support body 22. On both sides of the plate-shaped body section 25, the spindle element 15 is provided with shoulders defining an outer diameter which is larger than the diameter of the through-hole 35 so that said shoulders form axial support surfaces or stopper surfaces limiting axial movement of the spindle element 15 relative to the support body 22 and holding the spindle element 13 in position.

As can be seen from Figures 7 and 8, the plate-shaped body section 25 is pro-vided with a groove-shaped, annular recess 28 surrounding the through-hole 35 and/or the spindle element 15. Consequently, the material of the support body 22 immediately surrounding through-hole 35 forms a bearing sleeve 27 which is elastically held by the remaining portion of the plate-shaped body section 25 so that the orientation of the bearing sleeve 27 may elastically vary in a sort of tumbling motion. This elasticity provided by the groove 28 provides for an alignment of the orientation of the through-hole 35 and the axis of the spindle element 15 and ensures uniform contact forces preventing wear and tear at the support surfaces. In particular, the bearing sleeve 27 may follow a tumbling motion of the axis of the spindle element 15 what may be caused by a, e.g., banana-like curvature of said spindle element 15.

The elastic support of the bearing sleeve 27 which supports the transmission element 9 is adapted such that the bearing sleeve 27 may pivot about axes perpendicular to the axis of rotation 30 of the spindle element 15, wherein such pivoting motion of the bearing sleeve 27 is possible in different directions, i.e. about different pivoting axes perpendicular to the axis of rotation. Consequently, the bearing sleeve 27 is supported by a pivotable, elastic support structure for allowing compensation of misalignment between the bearing sleeve axis and the longitudinal axis of the transmission element 9.

Despite such elasticity and/or deformability in terms of the orientation of the bearing sleeve axis, the support structure for the bearing sleeve 27 and/or the transmission element 9 is rather rigid with regard to transverse displacement, i.e. displacement of the support point transverse to the axis of rotation 30 of the transmission element, thereby achieving precise engagement with the next transmission element. The aforementioned groove-shaped, annular recess 28 for achieving the elasticity of the support structure may have different geometries and sizes. According to an embodiment of the invention, the recess 28 may have a depth of about 30% to 75%, preferably 40% to 60% of the thickness of the plate-shaped body section 25, thus reducing the thickness of the plate-shaped body section 25 by approx. 50%. Such dimension of the annular recess 28 provides for a good balance of elasticity for pivoting or tumbling motions on the one hand and transverse rigidity.

In order to further reduce wear and tear at the bearing sleeve 27 and the respective bearing surface at the spindle element 15, a lubricant storage may be provided to continuously provide the contact surfaces with lubricant such as grease. In particular, the support body 22 may be provided with a pocket-like recess 36 for storage of lubricant and opening to the through-hole 35, cf. Fig. 8. The lubricant storage recess 36 may be formed by a bore extending transversely to the axis of the bearing sleeve 27 and opening into said through-hole 35.

As can be seen from Fig. 7, also the spindle element 15 can be provided with a bore-like recess 37 extending through the support portion received in bearing sleeve 27, wherein said recess 37 may extend coaxially with the axis of rotation of the spindle element 15. The recess 37, however, is not used for storing lubricant, but serves the purpose to reduce the wall thickness and thus reduce the shrinkage of the support portion to achieve a better contact of the bearing surfaces.

As shown by Figures 2 and 7, the aforementioned support body 22 also supports the output shaft 21. For this purpose, the support body 22 includes a dome-shaped projection 26 extending from the plate-shaped body section 25 towards the electric motor. The dome-shaped projection 26 is provided with a second support portion 24 which is formed as a sort of bearing sleeve to receive the respective support section of the output shaft 21 in a rotatable manner.

Consequently, the support portion 24 for the output shaft 21 extends between the two points of support for the transmission element 9 what allows to bring the other support portion 38 for the output shaft 21 closer back to the electric motor 6 so that a transmission having a short length can be achieved.

The support body 22 can be fixed to a transmission housing and/or a hand-piece housing to provide the necessary strength for the support of the output shaft 21. Preferably, the support body 22 may be in engagement with the transmission housing at more than one side of the support body 22, cf. Fig. 2. In particular, the support body 22 may include a supporting and/or positioning recess 40 projecting from the second supporting portion 24 supporting the output shaft 21 and in engagement with a respective recess in the transmission housing. Preferably, the projection 40 may extend from the top of the dome-shaped projection 26 substantially in parallel with the axis of rotation of the output shaft 21.

The second supporting portion 24 supporting the output shaft 21 has an in-creased supporting length. Preferably, the entire height of the dome-shaped projection 26 is used as a supporting surface for the output shaft 21 as well as for sup-porting the support body 22 at the surrounding structure such as the transmission housing. This gives the support of the output shaft 21 the necessary strength and rigidity.

In order to give the support of the output shaft 21 the desired strength, it is the dome-shaped projection 26 that includes a plurality of support surfaces oriented into different directions so as to exactly position the dome-shaped projection 26 relative to neighboring structural walls such as a transmission housing and/or handle housing. In addition to the aforementioned projection 40, it is preferred to have at least a section of the outer circumferential surface of the dome-shaped projection 26 and/or a top surface of said dome-shaped projection 26 to form positioning and/or supporting surfaces which abut against neighboring structural walls.

As can be seen from Fig. 9, the spindle element 15 may have a cross-section deviating from a circular shape. In particular, the spindle element 15 may have balancing projections such as radially projecting ribs 41. In particular, the spindle element 15 may have balancing elements for balancing the orbiting pinion 31 for driving the swiveling arm 32.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. Electrical appliance for personal use, in particular a toothbrush or a shaver, comprising a working tool, a drive-train (7) and an electric motor (6) for driving the working tool via the drive-train (7), said drive-train (7) comprising a driving wheel (8) for driving a transmission element (9) in engagement therewith, said driving wheel (8) having a mounting portion (10) mounted on a driving shaft (12) connected to said electric motor (6), wherein an engagement portion (11) of said driving wheel (8), which is in engagement with said transmission element (9), is positioned axially offset from said mounting portion (10) of the driving wheel (8), wherein said mounting portion includes a dead-end recess (13) for receiving said driving shaft (12) in a rotatably secured manner, said dead-end recess (13), in terms of its axial extension, ending before the engagement portion (11), **characterized in that**, the dead-end recess 13) has a polygonal cross-section and the cross-section of the driving shaft is circular.

2. The electrical appliance according to claim 1, wherein the engagement portion is a full-bodied portion free of recesses.

3. The electrical appliance in accordance with any one of the preceding claims, wherein said engagement portion (11) has an outer diameter (d) smaller than the outer diameter (D) of said mounting portion (10), wherein preferably said engagement portion (11) has an outer circumferential surface provided with a toothing and/or the mounting portion (10) has an even, smooth outer circumferential surface without engagement means such as toothings.

4. The electrical appliance in accordance with any one of the preceding claims, wherein the dead-end recess (13) is press-fitted onto the driving shaft (12) and/or rotatively secured to said driving shaft (12) by frictional engagement.

5. The electrical appliance in accordance with any one of the preceding claims, wherein said polygonal cross-section of said dead-end recess (13) has more than four, in particular more than six flattened and/or polygonal contours.

6. The electrical appliance in accordance with any one of the preceding claims, wherein the axial length (1) of the engagement portion (11) is 25% to 65% of the entire axial length of the driving wheel (8) and/or the axial length (L) of the mounting portion (10) is 35% to 75% of the entire length of the driving wheel (8).

7. The electrical appliance in accordance with any one of the preceding claims, wherein said transmission element (9) driven by said driving wheel (8) includes a spindle element (15) with a wheel element (16) attached to one end thereof and in engagement with said driving wheel (8), said one end of the spindle element (15) being provided with a support piece (17) for rotatably supporting the spindle element (15) at a support member (18) connected to a housing and/or to said electric motor (6), wherein said support member (18) is spaced apart from said electric motor (6) further than the mounting portion (10) of said driving wheel (8) attached to the driving shaft (12) connected to the electric motor (6).

8. The electrical appliance according to claim 7, wherein said support member (18) is positioned, in the axial direction parallel to the driving shaft (12), in proximity to the end surface (19) of the driving wheel (8) opposite to the electric motor (6) and/or the wheel element (16) attached to the spindle element (15) extends in said axial direction beyond the support piece (17) and is closer to said electric motor (6) than said support piece (17).

9. The electrical appliance in accordance with any one of claims 7 and 8, wherein said support member (18) is formed by a top portion of a projection (20) projecting from said electric motor (6) towards the transmission element (9), said projection (20) preferably having an axial extension in the direction of the driving shaft (12) which extension is longer than the axial length of the mounting portion (10) of the driving wheel (8).

10. The electrical appliance in accordance with any one of claims 7-9, wherein said wheel element (16) and said support piece (17) are formed as an integral one-piece part with the spindle element (15).

11. The electrical appliance in accordance with any one of the preceding claims, wherein said transmission element (9) and an output shaft (21) driven by said transmission element (9) are radially supported by a common support body (22) having a first support portion (23) supporting said transmission element (9) and a second support portion (24) supporting said output shaft (21).

12. The electrical appliance in accordance with claim 11, wherein said second support portion (24) extends closer to the electric motor (6) than said first support portion (23).

13. The electrical appliance in accordance with any one of claims 11 and 12, wherein said support body (22) includes a plate-shaped body section (25) including said first support portion (23) and a dome-shaped projection (26) extending from said plate-shaped body section (25) towards the electric motor (6) and being provided with said second support portion (24).

14. The electrical appliance in accordance with any one of the preceding claims, wherein said transmission element (9) is rotatably supported by an elastic support structure having a bearing sleeve (27) receiving said transmission element (9), said bearing sleeve (27) being elastically held to allow tumbling of said transmission element (9).

15. The electrical appliance in accordance with claim 14, wherein said bearing sleeve (27) is held by and connected to a preferably plate-shaped body section (25) having a reduced thickness section surrounding said bearing sleeve (27), said reduced thickness section preferably being formed by an annular groove (28) formed in said plate-shaped body section (25).

## Patentansprüche

1. Elektrogerät für den persönlichen Gebrauch, insbesondere eine Zahnbürste oder ein Rasierer, umfassend ein Arbeitswerkzeug, einen Antriebsstrang (7) und einen Elektromotor (6), um das Arbeitsgerät mittels des Antriebsstrangs (7) anzutreiben, wobei der Antriebsstrang (7) ein Antriebsrad (8) zum Antreiben eines damit in Eingriff stehenden Kraftübertragungselements (9) umfasst, wobei das Antriebsrad (8) einen Befestigungsabschnitt (10) aufweist, der an einer mit dem Elektromotor (6) verbundenen Antriebswelle (12) befestigt ist, wobei ein Eingriffabschnitt (11) des Antriebsrads (8), welches mit dem Kraftübertragungselement (9) in Eingriff steht, axial versetzt von dem Befestigungsabschnitt (10) des Antriebsrads (8) angeordnet ist, wobei der Befestigungsabschnitt eine einseitig begrenzte Aussparung (13) zur Aufnahme der Antriebswelle (12) auf eine drehbar befestigte Weise umfasst, wobei die einseitig begrenzte Aussparung (13) bezüglich ihrer axialen Ausdehnung vor dem Eingriffabschnitt (11) endet, **dadurch gekennzeichnet, dass** die einseitig begrenzte Aussparung (13) einen vieleckigen Querschnitt aufweist und der Querschnitt der Antriebswelle kreisförmig ist.

2. Elektrogerät nach Anspruch 1, wobei der Eingriffabschnitt ein Ganzkörperabschnitt ohne Aussparungen ist.

3. Elektrogerät gemäß einem der vorstehenden Ansprüche, wobei der Eingriffabschnitt (11) einen äußeren Durchmesser (d) aufweist, der kleiner als der äußere Durchmesser (D) des Befestigungsabschnitts (10) ist, wobei der Eingriffabschnitt (11) vorzugsweise eine mit einer Verzahnung versehene äußere Umfangsoberfläche aufweist und/oder der Befestigungsabschnitt (10) eine ebene, glatte äußere Umfangsoberfläche ohne Eingriffsmittel wie Verzahnungen aufweist.

4. Elektrogerät gemäß einem der vorstehenden Ansprüche, wobei die einseitig begrenzte Aussparung (13) auf die Antriebswelle (12) pressgepasst ist und/ oder mittels Reibeingriff drehbar an der Antriebswelle (12) befestigt ist.

5. Elektrogerät gemäß einem der vorstehenden Ansprüche, wobei der vieleckige Querschnitt der einseitig begrenzten Aussparung (13) mehr als vier, insbesondere mehr als sechs abgeflachte und/oder vieleckige Konturen aufweist.

6. Elektrogerät nach einem der vorstehenden Ansprüche, wobei die axiale Länge (1) des Eingriffabsclmitts (11) 25 % bis 65 % der gesamten axialen Länge des Antriebsrads (8) beträgt und/oder die axiale Länge (L) des Befestigungsabschnitts (10) 35 % bis 75 % der gesamten Länge des Antriebsrads (8) beträgt.

7. Elektrogerät nach einem der vorstehenden Ansprüche, wobei das von dem Antriebsrad (8) angetriebene Kraftübertragungselement ein Spindelelement (15) aufweist, an dessen einem Ende ein Radelement (16) befestigt ist und das mit dem Antriebsrad (8) in Eingriff steht, wobei das eine Ende des Spindelelements (15) mit einem Stützstück (17) zur drehbaren Unterstützung des Spindelelements (15) an einem Stützelement (18), das mit einem Gehäuse und/oder dem Elektromotor (6) verbunden ist, versehen ist, wobei das Stützelement (18) von dem Elektromotor (6) weiter beabstandet ist als der Befestigungsabschnitt (10) des Antriebsrads (8), das an der mit dem Elektromotor (6) verbundenen Antriebswelle (12) befestigt ist.

8. Elektrogerät nach Anspruch 7, wobei das Stützelement (18) in der axialen Richtung parallel zur Antriebswelle (12) in der Nähe der Endfläche (19) des Antriebsrads (8) gegenüber dem Elektromotor (6) angeordnet ist und/oder das an dem Spindelelement (15) befestigte Radelement (16) sich in der axialen Richtung über das Stützstück (17) hinaus erstreckt und näher an dem Elektromotor (6) ist als das Stützstück (17).

9. Elektrogerät gemäß einem der Ansprüche 7 und 8, wobei das Stützelement (18) von einem oberen Abschnitt eines Vorsprungs (20) gebildet wird, der aus dem Elektromotor (6) in Richtung des Kraftübertragungselements (9) hervorsteht, wobei der Vorsprung (20) vorzugsweise eine axiale Ausdehnung in Richtung der Antriebswelle (12) aufweist, wobei die Ausdehnung länger ist als die axiale Länge des Befestigungsabschnitts (10) des Antriebsrads (8).

10. Elektrogerät gemäß einem der Ansprüche 7-9, wobei das Radelement (16) und das Stützstück (17) als integrales einstückiges Teil mit dem Spindelelement (15) ausgebildet sind.

11. Elektrogerät gemäß einem der vorstehenden Ansprüche, wobei das Kraftübertragungselement (9) und eine von dem Kraftübertragungselement (9) angetriebene Ausgangswelle (21) radial von einem gemeinsamen Stützkörper (22) gestützt werden, der einen ersten Stützabschnitt (23), der das Kraftübertragungselement (9) stützt, und einen zweiten Stützabschnitt (24), der die Ausgangswelle (21) stützt, aufweist.

12. Elektrogerät gemäß Anspruch 11, wobei der zweite Stützabschnitt (24) sich näher am Elektromotor (6) erstreckt als der erste Stützabschnitt (23).

13. Elektrogerät gemäß einem der Ansprüche 11 und 12, wobei der Stützkörper (22) einen plattenförmigen Körperabschnitt (25) aufweist, der den ersten Stützabschnitt (23) und einen kuppelförmigen Vorsprung (26) aufweist, der sich von dem plattenförmigen Körperabschnitt (25) in Richtung des Elektromotors (6) erstreckt und mit dem zweiten Stützabschnitt (24) versehen ist.

14. Elektrogerät gemäß einem der vorstehenden Ansprüche, wobei das Kraftübertragungselement (9) drehbar von einer elastischen Stützstruktur gestützt wird, die eine Lagerhülse (27) aufweist, die das Kraftübertragungselement (9) aufnimmt, wobei die Lagerhülse (27) elastisch gehalten wird, um Taumelbewegungen des Kraftübertragungselements (9) zuzulassen.

15. Elektrogerät gemäß Anspruch 14, wobei die Lagerhülse (27) von einem vorzugsweise plattenförmigen Körperabschnitt (25) gehalten wird und damit verbunden ist, der einen verringerten Dickenabschnitt aufweist, der die Lagerhülse (27) umgibt, wobei der verringerte Dickenabschnitt vorzugsweise von einer in dem plattenförmigen Körperabschnitt (25) ausgebildeten ringförmigen Rille (28) gebildet wird.

## Revendications

1. Appareil électrique pour utilisation personnelle, en particulier une brosse à dents ou un rasoir, comprenant un outil de travail, un train d'entraînement (7) et un moteur électrique (6) pour entraîner l'outil de travail par l'intermédiaire du train d'entraînement (7), ledit train d'entraînement (7) comprenant une roue d'entraînement (8) pour entraîner un élément de transmission (9) en prise avec celle-ci, ladite roue d'entraînement (8) possédant une partie de montage (10) montée sur un arbre d'entraînement (12) attaché audit moteur électrique (6), dans lequel une partie de mise en prise (11) de ladite roue d'entraînement (8), qui est en prise avec ledit élément de transmission (9), est positionnée en sens axial, décalée par rapport à ladite partie de montage (10) de la roue d'entraînement (8), dans lequel ladite partie de montage inclut une cavité en cul-de-sac (13) pour recevoir ledit arbre d'entraînement (12) d'une manière fixée rotative, ladite cavité en cul-de-sac (13), en termes d'extension axiale de celle-ci, se terminant avant la partie de mise en prise (11), **caractérisé en ce que** la cavité en cul-de-sac (13) a une coupe transversale polygonale et la coupe transversale de l'arbre d'entraînement est circulaire.

2. Appareil électrique selon la revendication 1, dans lequel la partie de mise en prise est une partie pleine exempte de cavités.

3. Appareil électrique selon l'une quelconque des revendications précédentes, dans lequel ladite partie de mise en prise (11) a un diamètre externe (d) plus petit que le diamètre externe (D) de ladite partie de montage (10), dans lequel, de préférence, ladite partie de mise en prise (11) a une surface circonférentielle externe pourvue d'une denture et/ou la partie de montage (10) a une surface circonférentielle externe régulière lisse dépourvue de moyens d'engrènement tels que des dentures.

4. Appareil électrique selon l'une quelconque des revendications précédentes, dans lequel la cavité en cul-de-sac (13) est à ajustement serré sur l'arbre d'entraînement (12) et/ou fixée rotative audit arbre d'entraînement (12) par une mise en prise par frottement.

5. Appareil électrique selon l'une quelconque des revendications précédentes, dans lequel ladite coupe transversale polygonale de ladite cavité en cul-de-sac (13) a plus de quatre, en particulier plus de six, contours aplatis et/ou polygonaux.

6. Appareil électrique selon l'une quelconque des revendications précédentes, dans lequel la longueur axiale (1) de la partie de mise en prise (11) représente 25 % à 65 % de la longueur axiale entière de la roue d'entraînement (8) et/ou la longueur axiale (L) de la partie de montage (10) représente 35 % à 75 % de la longueur entière de la roue d'entraînement (8).

7. Appareil électrique selon l'une quelconque des revendications précédentes, dans lequel ledit élément de transmission (9) entraîné par ladite roue d'entraînement (8) inclut un élément de tourillon (15) avec un élément de roue (16) fixé à une extrémité de celui-ci et en prise avec ladite roue d'entraînement (8), ladite extrémité de l'élément de tourillon (15) étant pourvue d'une pièce de support (17) pour soutenir de manière rotative l'élément de tourillon (15) au niveau d'un élément de support (18) attaché à un logement et/ou audit moteur électrique (6), dans lequel ledit élément de support (18) est espacé dudit moteur électrique (6) davantage que la partie de montage (10) de ladite roue d'entraînement (8) fixée à l'arbre d'entraînement (12) attaché au moteur électrique (6).

8. Appareil électrique selon la revendication 7, dans lequel ledit élément de support (18) est positionné, dans la direction axiale parallèle à l'arbre d'entraînement (12), à proximité de la surface extrême (19) de la roue d'entraînement (8) opposée au moteur électrique (6) et/ou l'élément de roue (16) fixé à l'élément de tourillon (15) s'étend dans ladite direction axiale au-delà de la pièce de support (17) et est plus proche dudit moteur électrique (6) que ladite pièce de support (17).

9. Appareil électrique selon l'une quelconque des revendications 7 et 8, dans lequel ledit élément de support (18) est formé par une partie supérieure d'une saillie (20) faisant saillie dudit moteur électrique (6) en direction de l'élément de transmission (9), ladite saillie (20) ayant de préférence une extension axiale dans la direction de l'arbre d'entraînement (12), laquelle extension est plus longue que la longueur axiale de la partie de montage (10) de la roue d'entraînement (8).

10. Appareil électrique selon l'une quelconque des revendications 7 à 9, dans lequel ledit élément de roue (16) et ladite pièce de support (17) sont formés en tant que partie monobloc d'un seul tenant avec l'élément de tourillon (15).

11. Appareil électrique selon l'une quelconque des revendications précédentes, dans lequel ledit élément de transmission (9) et un arbre de sortie (21) entraîné par ledit élément de transmission (9) sont soutenus en sens radial par un corps de soutien commun (22) possédant une première partie de soutien (23) soutenant ledit élément de transmission (9) et une deuxième partie de soutien (24) soutenant ledit arbre de sortie (21).

12. Appareil électrique selon la revendication 11, dans lequel ladite deuxième partie de soutien (24) s'étend plus proche du moteur électrique (6) que ladite première partie de soutien (23).

13. Appareil électrique selon l'une quelconque des revendications 11 et 12, dans lequel ledit corps de soutien (22) inclut une section de corps en forme de plaque (25) incluant ladite première partie de soutien (23) et une saillie en forme de dôme (26) s'étendant de ladite section de corps en forme de plaque (25) en direction du moteur électrique (6) et comportant ladite deuxième partie de soutien (24).

14. Appareil électrique selon l'une quelconque des revendications précédentes, dans lequel ledit élément de transmission (9) est soutenu de manière rotative par une structure de soutien élastique possédant une douille de palier (27) recevant ledit élément de transmission (9), ladite douille de palier (27) étant maintenue élastiquement pour permettre un basculement dudit élément de transmission (9).

15. Appareil électrique selon la revendication 14, dans lequel ladite douille de palier (27) est maintenue par, et attachée à une section de corps de préférence en forme de plaque (25) possédant une section d'épaisseur réduite entourant ladite douille de palier (27), ladite section d'épaisseur réduite étant de préférence formée par une rainure annulaire (28) formée dans ladite section de corps en forme de plaque (25).
